**Europäisches Patentamt**

**European Patent Office**

**Office européen des brevets**

(11) Veröffentlichungsnummer: **0 391 164**

**A1**

(12) **EUROPÄISCHE PATENTANMELDUNG**

(21) Anmeldenummer: **90105490.8**

(22) Anmeldetag: **23.03.90**

(51) Int. Cl.5: **E01B 25/24, //B65G17/20**

(30) Priorität: **01.04.89 DE 8903978 U**

(43) Veröffentlichungstag der Anmeldung:
**10.10.90 Patentblatt 90/41**

(84) Benannte Vertragsstaaten:
**DE FR IT**

(71) Anmelder: **WAMPFLER GMBH**
**Rheinstrasse 27 Postfach 19 28**
**D-7858 Weil am Rhein-Märkt(DE)**

(72) Erfinder: **Bormann, Uwe**
**Ringstrasse 12**
**D-7851 Rümmingen(DE)**
Erfinder: **Görner, Dieter**
**Bergwerkstrasse 42**
**D-7862 Hausen i.W.(DE)**

(74) Vertreter: **Charrier, Rolf, Dipl.-Ing.**
**Postfach 260 Rehlingenstrasse 8**
**D-8900 Augsburg 31(DE)**

(54) **Stossverbindungsvorrichtung.**

(57) Zwei benachbarte Träger von im wesentlichen rechteckigem Querschnitt weisen unten ein C-förmiges Profil (2), längs dem Transporthänger (4) verfahrbar sind, und seitlich Schleifleitungen (11) auf, die mit Schleifkontakten (12) eines Stromabnehmerwagens (9) in Kontakt stehen. Die Träger (1) sind mit einem Hohlprofil (5) versehen. Zur Stoßverbindung der Enden der benachbarten Träger (1) sind zwischen diesen Enden Zwischenstücke angeordnet und im Hohlprofil (5) zwei Profilabschnitte (13) vorgesehen, die sich jeweils zu einem auf der Spitze stehenden Vierkant ergänzen und in die jeweils ein Vierkantrohr (27) eingesetzt ist, das die Enden miteinander verbindet. An den Oberseiten der Enden sind jeweils L-förmige Winkeleisen (21) vorgesehen, die miteinander verschraubt sind. Weiterhin sind an beiden Vertikalseiten des Trägers (1) die Enden durch Zuganker (25) miteinander verbunden.

FIG. 1

Die Neuerung betrifft eine Stoßverbindungsvorrichtung nach dem Oberbegriff des Anspruches 1.

Bei einem neu entwickelten Transportsystem der Anmelderin sind Träger vorgesehen, die an ihrer Unterseite ein C-Profil aufweisen, längs dem auf Rollen Transporthänger verfahrbar sind. Seitlich hierzu sind an den Vertikalseiten längs verlaufende Schleifleitungen vorgesehen. Parallel zu diesen Schleifleitungen verlaufen Trag- und Führungsbahnen, längs denen Stromabnehmerwagen verfahrbar sind, die mit ihren Schleifkontakten in Eingriff mit den Schleifleitungen stehen. An diese Stromabnehmerwagen können Werkzeuge eingehängt werden, mit denen Werkstücke bearbeitet werden, die an den Transporthängern befestigt sind. Des weiteren weisen die Träger einen Hohlraum auf, der an eine Druckgasquelle angeschlossen ist. Durch an den Trägern angebrachte Druckgasanschlüsse können auf diese Weise Verbraucher mit Druckgas versorgt werden.

Da diese Träger nur mit einer endlichen Länge gefertigt werden können, ist es erforderlich, benachbarte Träger an ihren Stoßstellen miteinander zu verbinden. Auf Grund der unterschiedlichen Aufgaben, die die vorgenannten Träger übernehmen, ist es erforderlich, die Stoßstellen entsprechend mechanisch stabil und druckdicht auszubilden. Die Stoßstellen sollen weiterhin den elektrischen Erfordernissen entsprechen, eine Stromeinspeisung ermöglichen und die Möglichkeit geben, das Transportsystem zu erweitern.

Diese vorgenannten Aufgaben werden gelöst bei einer Stoßverbindungsvorrichtung nach den kennzeichnenden Merkmalen des Anspruches 1. Vorteilhafte Ausgestaltungen sind den Unteransprüchen entnehmbar.

Ausführungsbeispiele werden nachfolgend an Hand der Zeichnungen näher erläutert. Es zeigen:

Fig. 1: einen Schnitt durch einen Träger;

Fig. 2: eine Seitenansicht auf die Enden zweier benachbarter Träger bei einer ersten Ausführungsform einer Stoßstelle;

Fig. 3: einen Schnitt durch eine zweite Ausführungsform einer Stoßstelle;

Fig. 4: eine der Figur 2 entsprechende Seitenansicht dieser zweiten Ausführungsform;

Fig. 5: den Schnitt durch eine der Stromeinspeisung dienende Stoßstelle;

Fig. 6: eine perspektivische Ansicht eines bei der Verbindung verwendeten Klemmkeils und

Fig. 7: eine perspektivische Ansicht auf eine eine Stoßstelle überbrückende Bypassleitung.

Die Träger 1 weisen einen im wesentlichen rechteckigen Querschnitt auf. An ihrer Unterseite ist ein C-förmiges Schienenprofil 2 vorgesehen, längs dem die Rollen 3 eines Transporthängers 4 verfahrbar sind. Oberhalb des C-förmigen Schienenprofils 2 weisen die Träger einen länglichen Hohlraum 5 auf, der beispielsweise an eine Druckluftquelle angeschlossen ist. Weiterhin sind Stütz- und Tragbahnen 6, 7, 8 vorgesehen, längs denen ein Stromabnehmerwagen 9 verfahrbar ist. Im Bereich dieses Stromabnehmerwagens 9 weist der Träger 1 Schleifleitungsnuten 10 auf, in welche voneinander isolierte Schleifleitungen 11 eingesetzt sind. In Kontakt mit diesen Schleifleitungen 11 stehen Schleifkontake 12 des Stromabnehmerwagens 9.

Das Rollprofil 5 weist zwei vertikal untereinander angeordnete Profilabschnitte 13 auf, welche sich jeweils zu einem auf einer Spitze stehenden Vierkant ergänzen. Weiterhin sind an der Oberseite zwei schwalbenschwanzförmige Nuten 14 vorgesehen.

Zwischen den Enden zweier einander benachbarter Träger 1 ist eine Befestigungsplatte 15 eingesetzt, deren Querschnitt dem Querschnitt der Träger 1 entspricht. Zwischen der Befestigungsplatte 15 und den Enden der Träger 1 ist jeweils eine Dichtung 16 angeordnet, deren Querschnitt ebenfalls dem Querschnitt der Träger 1 entspricht. Die Befestigungsplatte 15 weist oben eine über die Träger 1 überstehende Verlängerung 17 auf, die mit zwei Befestigungsbohrungen 18 versehen ist, mit denen die Befestigungsplatte 15 an einem Tragteil 19 befestigbar ist, das seinerseits beispielsweise an einer Hallendecke befestigt ist.

An den Enden der einander benachbarten Träger 1 sind in die Nuten 14 jeweils ein Nutenstein 20 eingeschoben. Die Nutensteine 20 sind jeweils mit einer Gewindebohrung versehen, womit über Schrauben L-förmige Winkel eisen 21 an den Trägerenden festklemmbar sind. Die hochstehenden Schenkel der Winkeleisen 21 weisen jeweils eine Bohrung 22 auf, die jeweils mit einer Bohrung der Befestigungsplatte 15 fluchten. Durch diese Bohrungen 22 ist jeweils eine Schraube 23 geführt, über welche die Winkeleisen 21 gegeneinander und damit die Enden der Träger 1 gegen die Befestigungsplatte 15 geklemmt werden können.

Zwischen der obersten Schleifleitungsnut und der Tragbahn 8 sind bei den Trägern 1 jeweils im Querschnitt rechteckige Nuten 24 vorgesehen. An den Enden der Träger 1 sind in diese Nuten 24 jeweils zwei gegeneinander gerichtete Klemmkeile 25 eingesetzt, wobei jedes Klemmkeilenpaar über einen Zuganker 35 miteinander verbunden sind, der die Befestigungsplatte 15 überbrückt. Wird dieser Zuganker 35 mit einer Mutter verschraubt, dann verklemmen sich die Klemmkeile 25 in ihrer Nut 24, wobei dann die Enden der Träger 1 gegen die Befestigungsplatte 15 gepreßt werden. Die Nuten 24 befinden sich geringfügig unterhalb der Höhe des Schwerpunkts 26 der Träger 1.

In die Profilabschnitte 13 an den Enden der benachbarten Träger 1 sind die Befestigungsplatte 15 überbrückende Vierkantrohre 27 eingesetzt, die sowohl der Lastübertragung als auch der Zentrierung der Träger 1 und der Befestigungsplatte 15 dienen.

Auf diese Weise wird eine Stoßstelle geschaffen, an der benachbarte Träger 1 aufgehängt sind, bei der alle auftretenden Lastmomente übertragen werden, die das Einbringen durchgehender Schleifleitungen 11 ermöglicht und welche zusätzlich den Hohlraum 5 nach außen hin abdichtet.

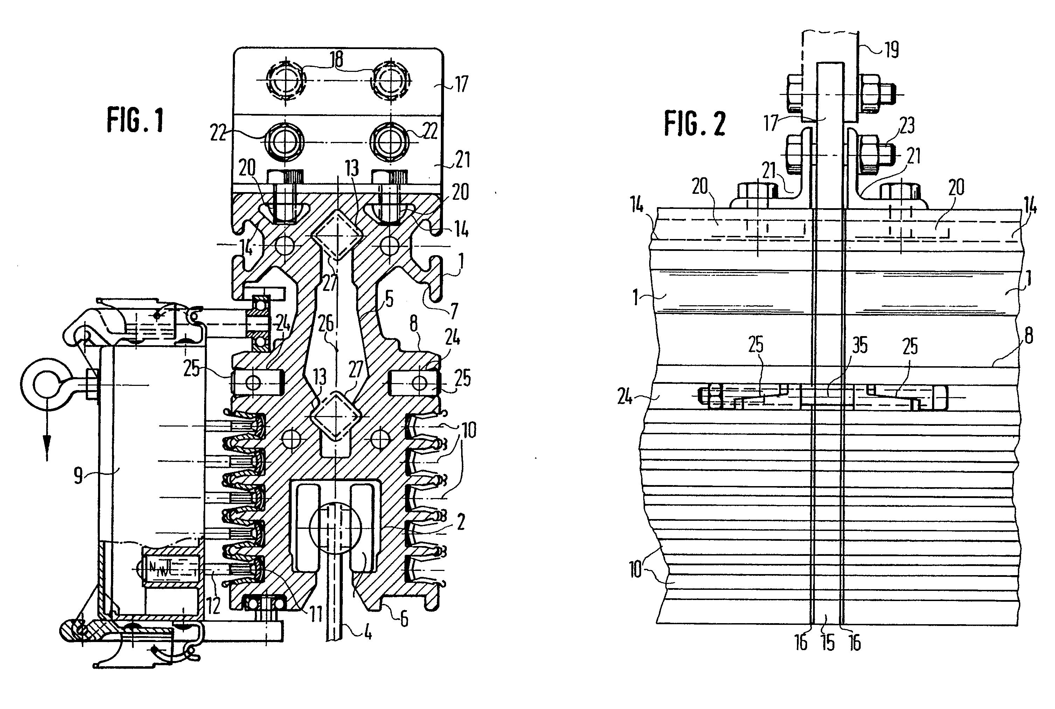

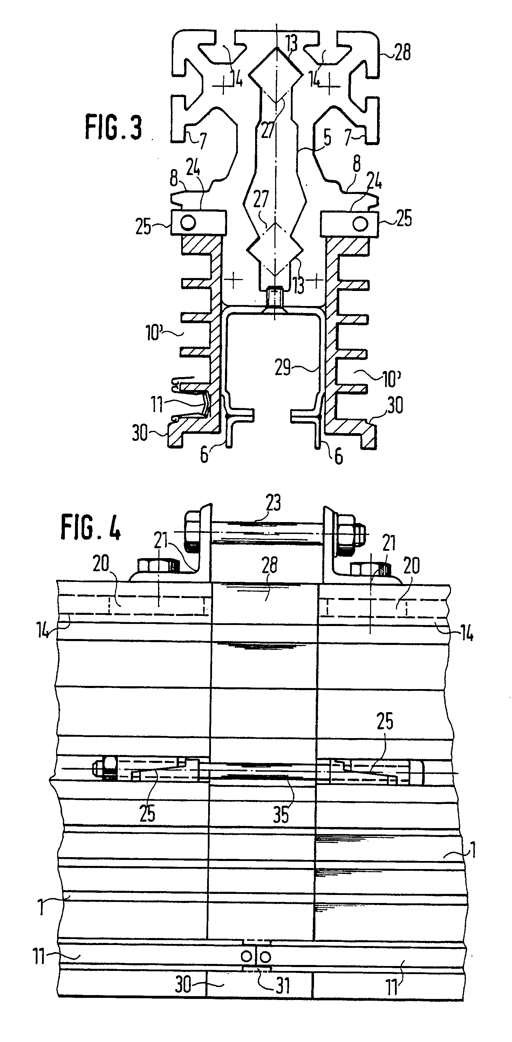

Bei der Stoßstelle nach den Figuren 3 und 4 liegen im wesentlichen die gleichen Verhältnisse vor wie bei der Stoßstelle nach den Figuren 1 und 2 jedoch mit den nachfolgenden Unterschieden:

Das Zwischenstück 28 ist breiter ausgebildet als die Befestigungsplatte 15 und weist an ihrer Oberseite keine Verlängerung auf, ist also bündig mit den Oberseiten der Träger 1. Außerdem fehlt das C-förmige Schienenprofil 2. Anstelle dieses Schienenprofils ist eine sogenannte C-Schiene 29 an der Unterseite des Zwischenstücks 28 befestigt. Weiterhin sind die Stromschienennuten 10 entfallen. An dieser Stelle ist jeweils ein Isolierteil 30 vorgesehen, welches ebenfalls Schleifleitungsnuten 10' aufweist.

Die über die Enden der Träger 1 überstehenden Stromschienen sind an ihren Enden im Bereich der Isolierteile 30 jeweils über ein Verbinderteil 31 miteinander elektrisch verbunden. Die Isolierteile 30 dienen zur Isolation, da die Kriechwege an den Stoßstellen bei Verlängerungen wieder erreicht werden müssen.

Im übrigen erfolgt die Verbindung zwischen den Enden benachbarter Träger wiederum wie vorbeschrieben über die Winkeleisen 21, die Schrauben 23, die Klemmkeile 25 und die Zuganker 35.

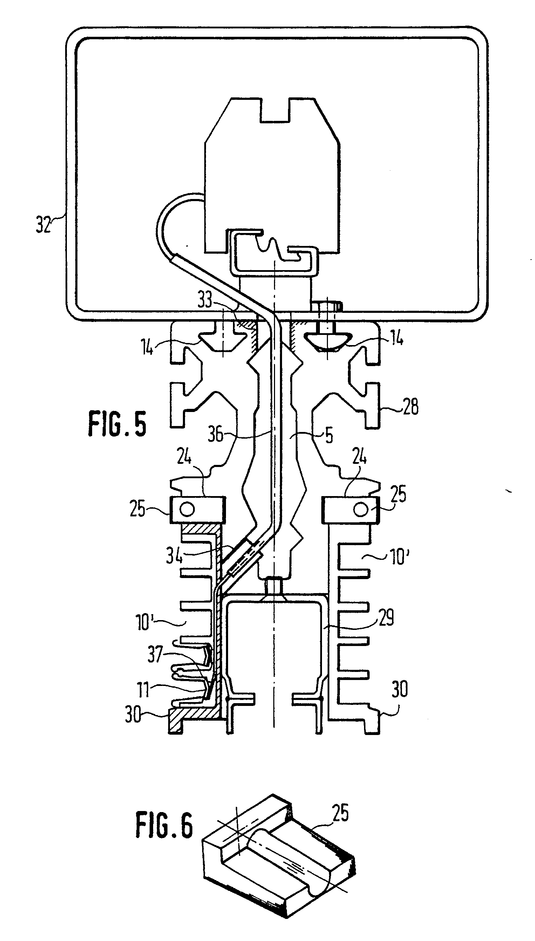

Die Stoßstelle nach der Figur 5 entspricht derjenigen nach den Figuren 3 und 4, dient jedoch gleichzeitig der Stromeinspeisung bei großen Schleifleitungslängen.

Über eine der schwalbenschwanzförmigen Nuten 14 ist ein Verteilerkasten 32 befestigt. An der Oberseite des Zwischenstücks 28 sind in Längsrichtung nebeneinander Bohrungen 33 vorgesehen, deren Anzahl gleich der Anzahl der zu speisenden Schleifleitungen 11 entspricht. Diese Bohrungen 33 verlaufen in den Hohlraum 5. Weiterhin sind im Bereich der Isolierteile 30 schräg verlaufende Bohrungen 34 vorgesehen, deren Anzahl ebenfalls der Anzahl der zu speisenden Schleifleitungen 11 entspricht. Durch die Bohrungen 33, 34 und den Hohlraum 5 sind Speiseleitungen 36 geführt, die jeweils vom Verteilerkasten 32 zu einer der Schleifleitungen 11 verlaufen. Eine Lötstelle 37 stellt jeweils die elektrische Verbindung zwischen einer Speiseleitung 36 und einer Schleifleitung 11 her. Um den Hohlraum 5 abzudichten, werden die Bohrungen 33, 34 jeweils mit einer Kunststoffmasse ausgegossen, welche die Bohrungen 33, 34 verschließt.

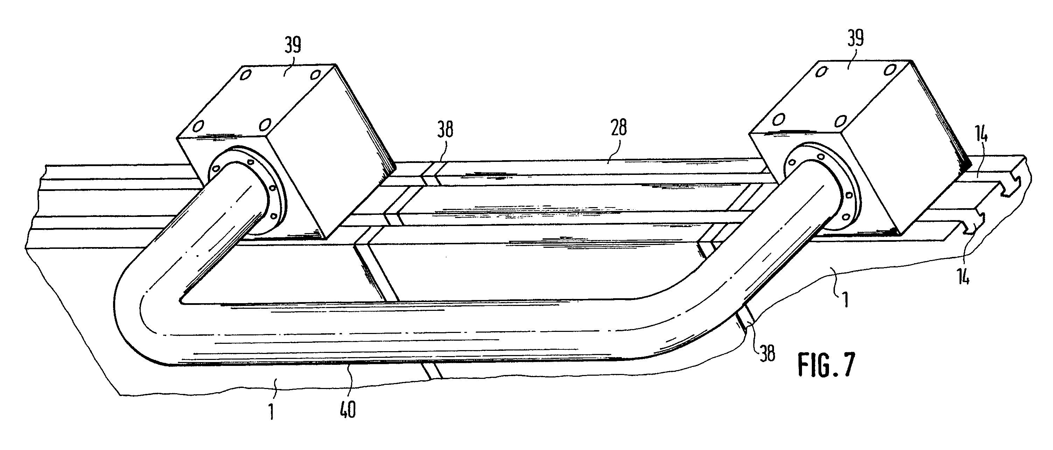

Anstelle dieses Ausgießens können auch die Hohlräume 5 an den Enden der Träger 1 durch eine Zwischenplatte verschlossen werden, die das Profil des Zwischenstücks 28 mit Ausnahme des Hohlraums 5 aufweisen. Solche Zwischenplatten 38 sind in Figur 7 angedeutet. Um dann die Hohlräume 5 der einander benachbarten Träger 1 miteinander verbinden zu können, sind an den Trägeroberseiten Gasanschlüsse 39 vorgesehen, die mit den Hohlräumen 5 in Verbindung stehen und die über eine Bypassleitung 40 miteinander verbunden sind.

## Ansprüche

1. Stoßverbindungsvorrichtung bei ein C-förmiges Schienenprofil aufweisenden Trägern, bei denen längs des Schienenprofils Transporthänger verfahrbar sind, die Träger oberhalb des Schienenprofils ein Hohlprofil aufweisen und mindestens längs einer Vertikalseite der im Querschnitt im wesentlichen rechteckigen Träger Schleifleitungen verlaufen, dadurch **gekennzeichnet**, daß zwischen den Enden benachbarter Träger (1) Zwischenstücke (15, 28) angeordnet sind, das Hohlprofil (5) mindestens einen Profilabschnitt (13) aufweist, der sich zu einem auf einer Spitze stehenden Vierkant ergänzt, in die Profilabschnitte (13) an den Enden benachbarter Träger (1) ein die Enden verbindendes und das Zwischenstück (15, 28) überbrückendes Vierkantrohr (27) eingesteckt ist, an den Oberseiten der Enden benachbarter Träger je mindestens ein L-förmiges Winkeleisen (21) angeordnet ist, die über einen Schraubbolzen (23) miteinander verbunden sind und an beiden Vertikalseiten der Enden benachbarter Träger (1) Zuganker (35) angreifen, die diese Enden miteinander verbinden.

2. Stoßverbindungsvorrichtung nach Anspruch 1, dadurch **gekennzeichnet**, daß das Zwischenstück eine Befestigungsplatte (15) ist, die eine über die Träger überstehende Verlängerung (17) mit mindestens einer Befestigungsbohrung (18) aufweist.

3. Stoßverbindungsvorrichtung nach Anspruch 1 oder 2, dadurch **gekennzeichnet**, daß an den Oberseiten der Träger (1) schwalbenschwanzförmige Nuten (14) vorgesehen sind, in die Nutensteine (20) eingreifen, welche mit den L-förmigen Winkeleisen (21) verschraubt sind.

4. Stoßverbindungsvorrichtung nach einem der Ansprüche 1 bis 3, dadurch **gekennzeichnet**, daß an den Vertikalseiten rechteckige Nuten (24) vorgesehen sind, an den Enden benachbarter Träger (1) jeweils zwei gegeneinander gerichtete Klemmkeile (25) in diese Nuten (24) eingesetzt sind und zwischen jeweils zwei Klemmkeilenpaaren die Zuganker (35) verlaufen.

5. Stoßverbindungsvorrichtung nach Anspruch 4, dadurch **gekennzeichnet**, daß die rechteckigen Nuten (24) etwa in Höhe des Schwerpunkts (26) der Träger (1) verlaufen.

6. Stoßverbindungsvorrichtung nach einem der Ansprüche 1 bis 5, dadurch **gekennzeichnet**, daß zwei im vertikalen Abstand zueinander angeordnete Profilabschnitte (13) vorgesehen sind, in die jeweils ein Vierkantrohr (27) eingesteckt ist.

7. Stoßverbindungsvorrichtung nach einem der Ansprüche 1 bis 6, dadurch **gekennzeichnet**, daß das Zwischenstück (28) das C-förmige Schienenprofil (2) und die Schleifleitungsnuten (10) ausspart, an der Unterseite des Zwischenstücks (28) eine C-Schiene (29) und seitlich davon je ein Schleifleitungsnuten (10') aufweisendes Isolierteil (30) befestigt sind.

8. Stoßverbindungsvorrichtung nach Anspruch 7, dadurch **gekennzeichnet**, daß durch das Zwischen stück (28) in Längsrichtung zueinander versetzte Speiseleitungen (36) von einem Verteiler (32) zu je einer Schleifleitung (11) verlaufen.

9. Stoßverbindungsvorrichtung nach Anspruch 8, dadurch **gekennzeichnet**, daß der Verteiler (32) auf dem Zwischenstück (28) angeordnet ist und die Speiseleitungen (36) im wesentlichen senkrecht durch das Zwischenstück (28) verlaufen.

10. Stoßverbindungsvorrichtung nach Anspruch 8 oder 9, dadurch **gekennzeichnet**, daß die Ein- und Ausführbohrungen (33, 34) für die Speiseleitungen (36), die im Hohlraum (5) des Zwischenstücks (28) münden, mit Kunststoff ausgegossen sind.

11. Stoßverbindungsvorrichtung nach Anspruch 8 oder 9, dadurch **gekennzeichnet**, daß die Hohlräume (5) an den Enden benachbarter Träger (1) durch eine Zwischenplatte (38) stirnseitig abgedichtet sind und die Hohlräume (5) dieser Enden durch eine außerhalb des Zwischenstücks (28) verlaufende Bypassleitung (40) miteinander verbunden sind.

12. Stoßverbindungsvorrichtung nach einem der Ansprüche 1 bis 10, dadurch **gekennzeichnet**, daß die Zwischenstücke (15, 28) den Hohlräumen (5) der Träger (1) entsprechende Hohlräume aufweisen und zwischen den Trägerenden und den Zwischenstücken (15, 28) Dichtungen (16) angeordnet sind.

13. Stoßverbindungsvorrichtung nach Anspruch 12, dadurch **gekennzeichnet**, daß die Dichtungen (16) aus teilweise in Nuten angeordneten O-Ringen bestehen.

FIG. 2

FIG. 1

FIG.3

FIG. 4

FIG.5

FIG.6

FIG.7

EP 0 391 164 A1

**Europäisches Patentamt**

**EUROPÄISCHER RECHERCHENBERICHT**

Nummer der Anmeldung

EP 90105490.8

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl⁵) |
|---|---|---|---|
| A | US - A - 2 443 371 (BARNER) * Fig. 1 * | 1 | E 01 B 25/24 // B 65 G 17/20 |
| A | DE - A1 - 3 108 951 (MANNESMANN) * Fig. 5 * | 1 | |
| A | EP - A1 - 0 040 292 (STAHL) * Fig. 14 * | 1 | |
| A | CH - A5 - 658 688 (INVENTIO) * Fig. 3 * | 1 | |

RECHERCHIERTE SACHGEBIETE (Int Cl⁵)

B 61 B
B 65 G
E 01 B

Der vorliegende Recherchenbericht wurde für alle Patentansprüche erstellt.

| Recherchenort | Abschlußdatum der Recherche | Prüfer |
|---|---|---|
| WIEN | 30-05-1990 | BAUMGARTNER |